# EUROPEAN PATENT APPLICATION

(11) **EP 0 560 277 A1**
(43) Date of publication of application: **15.09.1993**
(21) Application number: 93103745.1
(22) Date of filing: 09.03.1993
(51) Int. Cl.: G06F 1/00, G06F 11/00

(54) **Method and apparatus for controlling read and write of microcomputer hard disk**

(30) Priority: 11.03.1992 CN 92107305
(71) Applicant: Shao, Tong, Nanjing, Jiangsu 210014 (CN)
(72) Inventor: Shao, Tong, Nanjing, Jiangsu 210014 (CN)
(74) Representative: Hansmann, Dierk, Dipl.-Ing.

(57) **Abstract**

A hard disk read and write capability table is generated by a secure application software at the start-up of the computer for indicating the read and write capability of each sector of the hard disk, and this table is stored in a secure memory. During a hard disk read or write operation, the computer issues a request to a chip having computing ability, the legality of this read or write request is determined by the chip based on the hard disk read and write capability table, thereby, a hard disk read and write control circuit is controlled to allow or inhibit the execution of this read or write operation. This method and apparatus can effectively prevent the spread of computer viruses, so as to protect the files and data on hard disk from damages, alterations and illegal uses.

## Description

### Background of the Invention

The present invention relates to a method and apparatus for protecting data security on computer hard disks, and more particularly, to a method and apparatus for controlling read from and write to microcomputer hard disks.

As computer applications become more and more popular recently, computer crimes increase as well. There have been a lot of measures for committing crimes on computer, white computer virus is the most sophisticated and harmful one being preferred by computer criminals. What are mostly and widely attacked by computer viruses are the IBM microcomputers and their compatible machines based on the DOS operating system. The DOS operating system is a fully open system suitable to be used in personal development and application, which is easy to use and effective in data sharing. The documentation and reference manuals of the DOS operating system have been disclosed in full detail, and there is almost no secret remaining, therefore, the users may make expansions, clippings and modifications on the DOS operating system. Damages on its data can easily be made, since no hardware protection on the data used by it has been provided. Thus, the DOS operating system has become the main target to be attacked by computer viruses. A lot of efforts have been paid to increase the security of DOS, and various anti-virus software and anti-virus cards have been developed from the point of view of software. However, if protection of data on hard disks is not provided from the point of view of hardware, data on hard disks may be fully damaged by viruses once they flare up, resulting in the loss of tremendous valuable data and destruction of one's years-long painstaking labour. If the flare-up of virus results in the modification of data, the result is even more hazardous. The improving of security of DOS from hardware mainly lies in the improvement of reliable control of read from and write to hard disk. The hard disk driver is a subsystem of a microcomputer, which operates according to the instruction issued by the microcomputer, Because of the structure of the microcomputer, it is absolutely possible for the damaging operation to avoid being detected by any software monitor system prior to the issuing of them by the virus. Thus, only preprocessing can be employed, that is, if hard disk operations are required, the computer issues a corresponding request, and the disk may only be enabled to operate after error checking. The Chinese Patent (CN 10477160A) discloses an anti-virus method, of which the object of controlling hard disk read and write is implemented by controlling the read gating and write gating signal on the line from the hard disk adapter to the hard disk drive. However, the hard disk read and write control card designed with such method is of no chip having computing ability and the storage space is rather small, therefore it can only be used for protecting hard disk read and write with tracks as unit of protection. Since files under the DOS operating system are being accessed with clusters as unit, that is to say they are read or written with sectors as unit, while the state-of art hard disk access control card could only designate a certain logical disk as read-only or both readable and writable, thereby makes the man-machine interface of the security software provided to the user unfriendly and inconvenient.

### Summary of the Invention

Therefore, it is an object of the present invention to provide a method and apparatus for controlling read and write of microcomputer hard disk, which control the read and write of each sector of a hard disk, so as the read and write of each sector may be reliably controlled.

The method for controlling read and write of microcomputer hard disk according to the present invention comprises the steps of generating a hard disk read and write capability table with a secure and trusted software at power-on or reset of the microcomputer to indicate the read and write capability of each portion of the whole hard disk space, and storing this capability table into a secure space to prevent it from unauthorized modification and damage. When the computer performs read and write operations, a read or write request is issued to a chip having computing ability by the computer, and the legality of this read or write request is determined by the chip having computing ability based on said hard disk read and write capability table, the read or write operation is enabled if it is legal, otherwise, it is disabled.

Based on the above-mentioned method, all apparatus for controlling read and write of microcomputer hard disk is provided by the present invention, said apparatus comprises an interface circuit, a chip having computing ability, a memory, and a hard disk read and write control circuit. Wherein, the memory stores the hard disk read and write capability table generated at power-on or reset of the microcomputer. When the microcomputer performs a hard disk read or write, it issues a read or write request through the interface circuit to the chip having computing ability, the chip having computing ability determines the legality of the request based on the read and write capability table stored in the memory, and instructs the read and write control circuit to enable a read or write operation by the microcomputer if the request is legal, otherwise it instructs the hard disk read and write control circuit to disable the read or write operation by the microcomputer. If the user select same subdirectory (subdirectories) as last time he selected, the hard disk read and write capability table will not be regenerated and the old one stored in the memory will be used.

The principle of the present invention is as fallows: at power on or start-up of the microcomputer, if it is initiated from the hard disk, then the hard disk read and write control apparatus according to the present invention sets the whole hard disk to be both readable and writable, otherwise if it is determined to be initiated from a floppy disk, then it sets the whole hard disk to be read only and unwritable. Provided that the microcomputer is virusless before installation of the hard disk read and write control apparatus of the present invention, then the system will definitely be unaffected and undamaged by viruses at initiation of the system, since the region used by the hard disk operating system during the operation of the microcomputer is set to be read only after installation of the apparatus of the present invention. After initiation of the system, the application software associated with the hard disk control apparatus of the present invention is entered, this software prompts the user to select readable and writable subdirectory (subdirectories) required to be used in this start-up or initiation, then the application software generates a hard disk read and write capability table to be used in this initiation, that is, only the files in the selected subdirectory (subdirectories) are readable and writable, all files in other subdirectories are read only or neither readable nor writable, and these functions are all ensured by hardwares. The read only or neither readable nor writable capability mentioned above does not override the read and write properties of the files in the original system, instead , each of the subdirectories is set to be read only or neither readable nor writable under the condition of not overriding the read and write properties of the original files. The hard disk read and write capability table thus generated is sent through an interface to the memory located on the hard disk read and write control apparatus to save the capability table to be used during this initiation, and this operation call only be done once at the start up of the system, there by, this read and write capability table can not be damaged by any illegal operation. Of course, the above mentioned operation can also be done on other occasions if necessary, that is, the read and write capability table call be updated after the system has been started up if necessary, however, this could reduce the safety factor of the hard disk control. After the fulfillment of the above mentioned pre-processing, the device driver associated with the hard disk (for example, INT13 wider the DOS operating system) is modified in the operating system. During operation by the user, if it is necessary to access the hard disk, it must first issue a request for the execution of this access to the hard disk read and write control apparatus via the device driver of the hard disk (for example, INT13) and the I/O interface, then the chip having computing ability (such as a monolithic processor) on the hard disk read and write control apparatus determines whether this access request is allowable, based on a look up of the read and write capability table stored in the memory, and returns the result of determination to the device driver of the hard disk (such as INT13) via the I/O interface, if it is allowable, then the hard disk read and write control circuit is enabled to perform read or write operation as desired, otherwise if it is unallowable, then this information is fed back to the device driver (such as INT13) via the I/O interface to disable the hard disk read and write control circuit, as well as an alarming is issued and this information is fed back to the operating system by driver.

As compared with the prior art, the present invention is of the following significant advantages 1. the hard disk read and write are controlled down to the sector level, so as the read and write of each sector can be protected reliably; 2. any attacking engaged by computer viruses of the operating system type call be prevented, so as the operating system can be ensured to be clean and virusless; 3.data on the hard disk are protected against arbitrary damages; 4.sensitive and confidential data in the computer are protected against illegal read or write. Therefore, the present invention can be widely used in virus prevention and data protection of various types of microcomputers.

### Brief Description of the Drawings:

Fig. 1 is a block diagram showing a first embodiment of the apparatus according to the present invention;
Fig. 2 is a block diagram showing a second embodiment of the apparatus according to the present invention;
Fig. 3 is a block diagram showing a third embodiment of the apparatus according to the present invention;
Fig. 4 is a block diagram showing a fourth embodiment of the apparatus according to the present invention; and
Fig. 5 is a block diagram showing a fifth embodiment of the apparatus according to the present invention, which is all improvement of the fourth embodiment.

### Description of the Preferred Embodiments

The present invention is mostly employed in applications under the DOS operating system.

Under the DOS operating system, the software for generating the hard disk read and write capability table may be programmed as follows. The absolute sector numbers can be arranged in incremental order with sector 1 of surface 0 of track 0 of hard disk 0 numbered as absolute sector number 0. The cluster numbers occupied by all protected files and subdirectories are recorded, then the absolute sector numbers corresponding to those cluster numbers are calculated. The read and write condition of each absolute sector is stored in the order from least significant bit to most significant bit and from lower address to higher address in a memory device, wherein two bite stand for the condition of each sectors (0, 0) representing neither readable nor writable; (1, 1) representing readable and writable; (1, 0) representing read only but not writable; and (0, 1) representing writable only but not readable, thereby a hard disk read and write capability table is generated.

when the computer requests a read or write operation, the chip having computing ability calculates the position of the absolute sectors requested to be read or written based on the track number, surface number and the number of the starting sector and the amount of sectors, and determines the legality of the read or write request based on the read and write capability condition of those sectors stored in the memory.

In the preferred embodiment of the present invention, if the request is determined to be illegal, the read or write operation is inhibited and at the same time necessary information is fed back to the operating system to inform the operator.

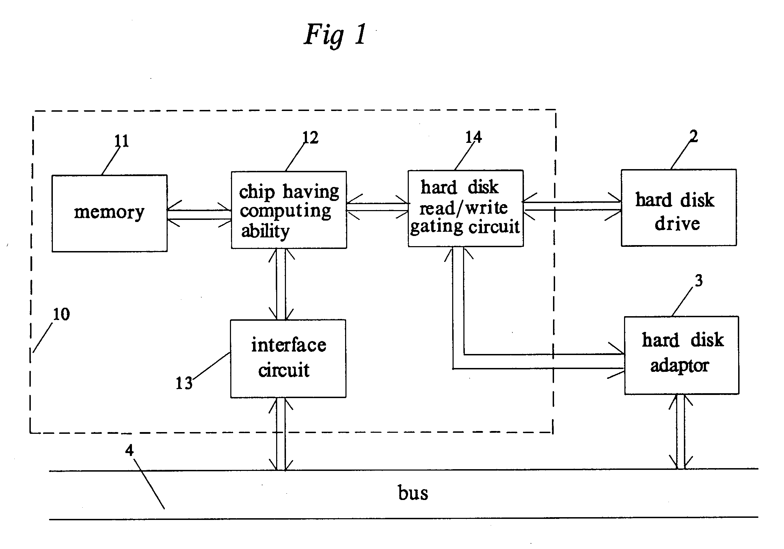

After determining the legality of a hard disk read or write request, one method for controlling whether this read or write operation call be performed is implemented by enabling or disabling the communication from the hard disk adaptor to the hard disk drive. An embodiment of the apparatus corresponding to this method is illustrated in Fig 1. Wherein, 10 indicates the hard disk read and write control apparatus of the present invention; 11 indicates a memory device for storing the hard disk read and write capability table, such as a RAM, etc.; 12 indicates a chip having computing ability, such as a monolithic processor; 13 indicates an interface circuit between the apparatus and the computer, in addition, 2 indicates the hard disk drive of the computer; 3 indicates the hard disk adaptor of the computer; and 4 indicates the bus of the computer. Like numerals indicate like elements in the block diagram of other embodiments. Referring to Fig. 1, the hard disk read and write gating circuit 14 enables or disables the signal between the hard disk adaptor 3 and the hard disk drive 2 under the control of the chip having computing ability 12 in response to the result of determination of the legality of the read and write request made by the chip.

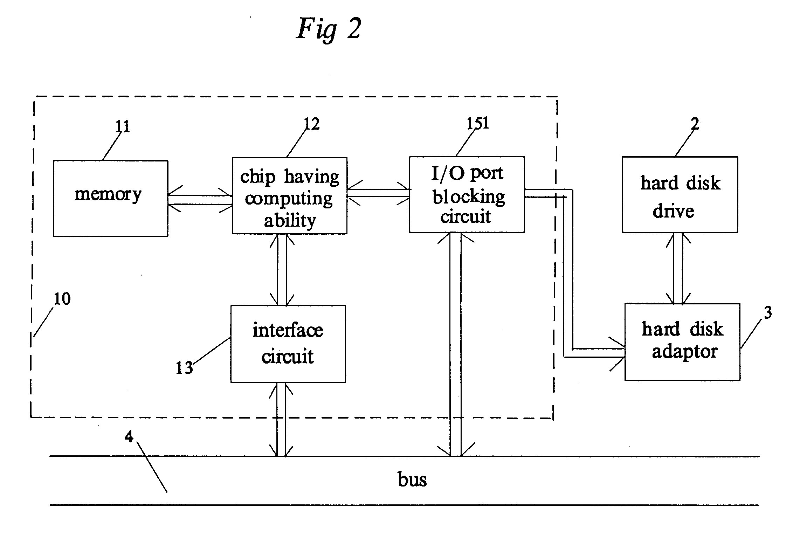

After determining the legality of a hard disk read or write request, another method for controlling whether this read or write operation can be performed is implemented by turn-on or turnoff the read or write signal sent from the bus to the hard disk adaptor. An embodiment of the apparatus corresponding to this method is illustrated in Fig 2, wherein, all the portions are similar with that shown in Fig. 1 with the exception of substituting the hard disk read and write gating circuit 14 with an I/O port blocking circuit 151 disposed between the bus 4 and the hard disk adaptor 3, which turns on or off the read or write signal sent from the bus 4 to the hard disk adaptor 3 based on the result of determination of the legality of the read or write request made by the chip 12.

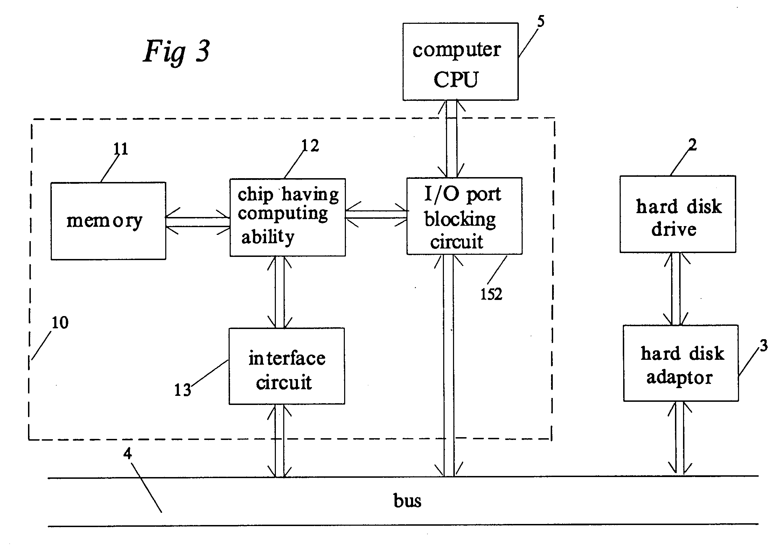

Another method similar to the above mentioned ones is implemented by turn-on or turnoff the signal sent from the CPU of the computer to the bus based on the determination of the legality of the read or write request made by the chip having computing ability. An embodiment of the corresponding apparatus is illustrated in Fig. 3, wherein, an I/O port blocking circuit 152 is disposed between the CPU of the computer and the bus 4, which turn off the signal associated with a hard disk read or write request issued by the CPU to the bus, on the occasion that the hard disk read or write request issued by the computer to the chip having computing ability is determined to be illegal, so as inhibiting the hard disk read or write operation without affecting other signals issued by the CPU.

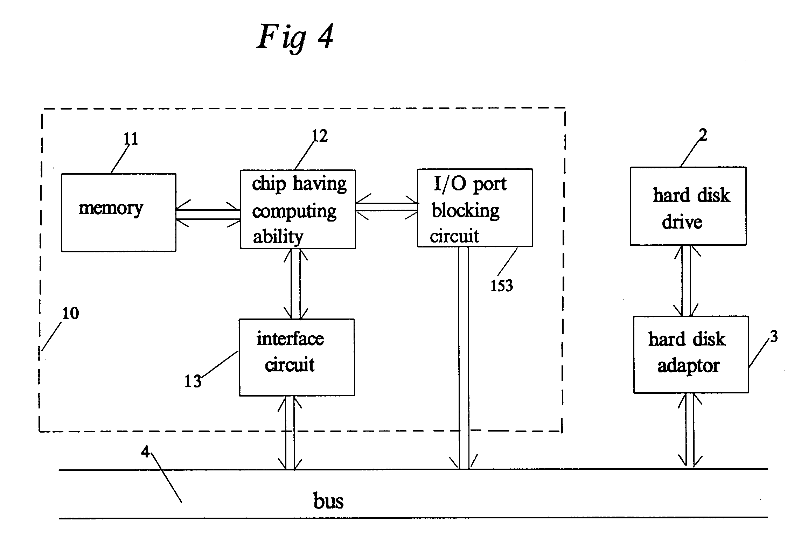

In the above mentioned embodiments, the introduction of the hard disk read and write control apparatus of the present invention requires either the connection between the hard disk adaptor and the hard disk drive or the connection between the bus and the hard disk drive, or the connection between the CPU and the bus to be out, and this may cause, inconvenience to ordinary users. Fig. 4 illustrates another embodiment, where in, the I/O port blocking circuit 153 performs wired "AND" operation with the hard disk read or write signal on the bus based on the result of determination of the legality of the hard disk read or write request made by the chip 12, to turn on or off the hard disk read or write signal on the bus. The original computer does not need not to be modified in this embodiment, while the whole read and write control apparatus 10 can be integrated into a single card to be inserted into an expander slot of the computer, which is more suitable for ordinary users.

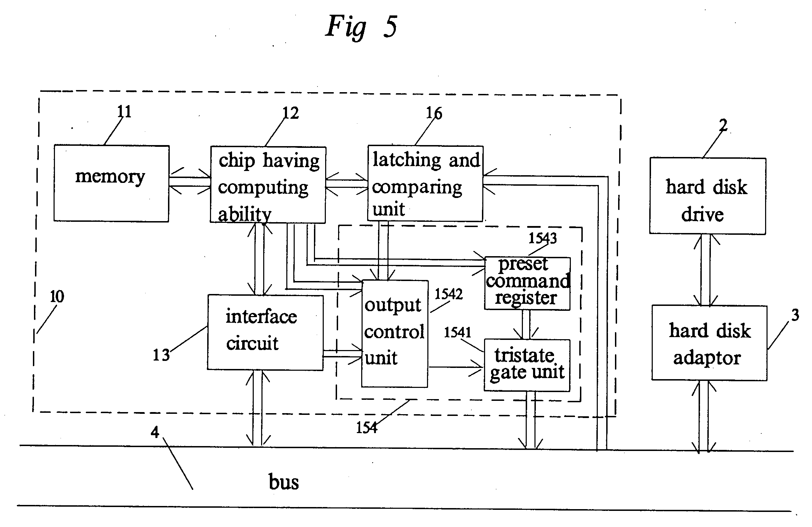

In a more sophisticated embodiment of the present invention, a step of preventing unauthentic access is further included. The so called "unauthentic access" relates to that, when the computer issues a hard disk read or write request to the chip having computing ability, it pretends to be an authentic request with legal read or write information, such as numbers of surface, track and sector, and after it has been determined as a legal request by the chip 12, it changes those legal read or write information into illegal ones to achieve its objective of illegal read or write of hard disk in the actual read or write operation. The step of preventing unauthentic access of the present invention is implemented by extracting read or write information (such as numbers of surface, track and sector to be read or written) from the read or write signals actually transmitted after validation of the read or write request, and comparing them with the corresponding read or write information in the validated legal request, then a determination is made to allow or deny the read or write operation depending on the result of the comparison. Fig. 5 illustrates a block diagram of an embodiment of the present invention, which has the function of unauthentic access preventing. Besides the memory 11, the chip having computing ability 12, the interface circuit 13 and the I/O port blocking circuit 154, it also comprises a latching and comparing unit 16. Said latching and comparing unit receives and latches the hard disk read or write request information (based on which the legality of read or write request is determined by the chip 12) from the chip 12, and compares them with the corresponding read or write information from the read or write signal actually transmitted, and sends the result of comparison to the I/O port blocking circuit 154. The I/O port blocking circuit 154 comprises three portions: a tristate gate unit 1541 including a plurality of tristate gates; a preset command register 1543, controlled by the chip 12 and preset to a state of blocking the hard disk read or write signal, the outputs of the register are coupled with the input of each of the tristate gates in the tristate gate unit respectively, while the output of each of the tristate gates in the tristate gate unit is coupled to the bus and prepared to perform wired "AND" operation with the signal on the bus, in addition, the I/O port blocking circuit 154 also comprises an output control unit 1542, which is controlled co-operatively by the signals from the chip 12, the interface circuit 13, and the latching and comparing unit 16, while the output of which is coupled to the control terminal of the tristate gate unit to control each of the tristate gate to the high resistance state or other states. The outputting result from the latching and comparing unit 16 also take part in the control of the output control writ 1542, therefore, the apparatus of the present invention can also inhibit the illegal read or write operation caused by unauthentic access.

Several embodiments of the present invention have been described with reference to the attached drawings, wherein the I/O port blocking circuit and the hard disk read and write gating circuit can both be worked out by those skilled in the act, and there are many possible schemes. In fact, a preferred embodiment of the present invention is one integrating the apparatus of the present invention with the hard disk adaptor, that is, producing a hard disk adaptor having the function of determining whether the read or write request is legal and thereby determining whether the read or write operation is allowed to be performed.

The above description has fully disclosed the essence of the present invention, and the present invention can be implemented with various schemes by those skilled in the art under the teaching of the present invention, therefore, the scope of the present invention is intended to be only limited by the appended claims.

## Claims

1. A method for controlling hard disk read and write, comprising the steps of :
a) generating a read and write capability table by a secure and trusted application software immediately after the power-on of a microcomputer, said read and write capability table is used for indicating the read and write capability of each portion of the whole hard disk space;
b) storing said read and write capability table into a reliable memory space to prevent it from illegal modifications and damages;
c) issuing a read or write request to a chip having computing ability by the computer when it requests to perform a read or write;
d) determining the legality of this read or write request by said chip having computing ability based on said read and write capability table; and
e) allowing the read or write operation to be performed if it is legal, otherwise inhibiting the read or writ operation.

2. The method according to claim 1, further comprising the step of feeding back necessary information to the computer when the read or write operation can not be carried out.

3. The method according to claim 1, wherein step (e) enabling or disabling the read or write operation by enabling or disabling the transmission of signals from a hard disk adaptor of the computer to a hard disk drive of the computer.

4. The method according to claim 1, wherein step (e) enabling or disabling the read or write operation by enabling or disabling the transmission of signals from a bus of the computer to a hard disk adaptor of the computer.

5. The method according to claim 4, wherein the signal from the bus to the hard disk adaptor is blocked by wired-anding an output signal of an I/O port blocking circuit controlled by said chip having computing ability with an I/O instruction output signal on said bus.

6. The method according to claim 1, wherein, step (e) enabling or disabling the hard disk read or write operation by enabling or disabling the transmission of signals from the CPU of the computer to a bus of the computer.

7. The method according to claim 1, further comprising the step of preventing unauthentic access, said step extracting related information from the actually transmitted read or write signal after validation of the legality of the read or write request, and comparing them with the corresponding information in the validated legal request to determine whether the read or write operation is allowed to be performed.

8. A hard disk read and write control apparatus, comprising:
a memory for storing a read and write capability table generated at each start-up of a microcomputer, said read and write capability table indicates the read and write capability of each portion of a hard disk;
a chip having computing ability for determining the legality of a hard disk read or write request issued by the microcomputer based on said read and write capability table stored in said memory;
a hard disk read and write control circuit for controlling whether a hard disk read or write request is allowed to be performed based on the determination of said chip; and
an interface circuit for communicating said hard disk read and write control apparatus with other portions of the computer.

9. The apparatus according to claim 8, wherein, said hard disk read and write control circuit is a hard disk read and write gating signal control circuit, said circuit is coupled between a hard disk adaptor of the computer and a hard disk drive of the computer, and determines to connect said hard disk adaptor with said hard disk drive under the control of said chip having computing ability.

10. The apparatus according to claim 8, wherein, said hard disk read and write control circuit is an I/O port blocking circuit disposed between a bus and a hard disk adaptor of the computer, said I/O port blocking circuit controls whether a signal on the bits is allowed to be transferred to the hard disk adaptor, under the control of said chip having computing ability.

11. The apparatus according to claim 8, wherein, said hard disk read and write control circuit is an I/O port blocking circuit disposed between the CPU and a bus of the computer, said I/O port blocking circuit controls whether a hard disk read or write signal issued by the CPU can be transferred to the bus, under the control of said chip having computing ability.

12. The apparatus according to claim 8, wherein, said hard disk read and write control circuit is an I/O port blocking circuit, said I/O port blocking circuit outputs an signal for wired-anding it with an I/O instruction output signal on the bus of the computer to inhibit an illegal read or write operation, under the control of said chip having computing ability.

13. The apparatus according to claim 12, wherein, said I/O port blocking circuit comprises a tristate gate unit, an output control unit, and a preset command register, said chip having computing ability sets said preset command register to a certain state depending on whether the hard disk read or write request is legal or not, and the outputs of said register is coupled with the input of each tristate gate in said tristate gate unit, respectively; said hard disk read and write control apparatus further comprises a latching and comparing unit, which latches the hard disk read or write request information from said chip having computing ability, and compares the latched information with corresponding information extracted from the actually transmitted read or write signal to determine the corresponding consistency therebetween, and sends the result of comparison to said output control unit; said output control unit generates a control signal under the co-operative control of said result of comparison, said interface circuit and said chip having computing ability, said control signal is sent to the control terminal of each tristate gate in said tristate gate unit to control the turn-on of the tristate gate, while the output of each tristate gate is coupled to the bus of the computer.

14. The apparatus according to claim 8, further comprising a latching and comparing unit for latching the hard disk read and write request information from said chip having computing ability, and comparing them with the corresponding information extracted from the actually transmitted read and write signal, and controlling said hard disk read and write control circuit to allow or inhibit the execution of the hard disk read or write operation, based on the consistency of the information.
